# EUROPEAN PATENT APPLICATION

(11) **EP 4 434 666 A1**
(43) Date of publication of application: **25.09.2024**
(21) Application number: 23020153.5
(22) Date of filing: 23.03.2023
(51) Int. Cl.: B23K 9/16, B23K 9/167, B23K 9/23, B23K 9/235, B23K 9/28, B23K 37/02, H05B 7/18

(54) **APPARATUS AND METHOD OF HEATING AN AREA OF A WORKPIECE PRIOR TO WELDING SAID AREA OF THE WORKPIECE AND/OR AFTER WELDING THE WORKPIECE, AND WELDING SYSTEM COMPRISING SUCH AN APPARATUS**

(71) Applicant: Linde GmbH, 82049 Pullach (DE)
(72) Inventor: SIEWERT, Erwan, 82049 Pullach (DE)
(74) Representative: Lu, Jing

(57) **Abstract**

The present invention relates to an apparatus (100) and to a method for heating an area of a workpiece prior to welding said area of the workpiece and/or after welding the workpiece, the apparatus (100) comprising a torch holder unit (110) and a multitude of arc torches (120), wherein each arc torch (120) of the multitude of arc torches is configured to be arranged at a predetermined torch position at the torch holder unit (110) and in a predetermined torch distance relative to a reference point in a longitudinal direction of the corresponding arc torch (120), particularly to a reference point on the workpiece, and wherein each arc torch (120) of the multitude of arc torches is configured to be controlled to ignite an arc between the corresponding arc torch (120) and the workpiece and to heat the area of the workpiece by means of the corresponding arc to a predetermined temperature below a melting temperature of a material of the workpiece.

## Description

The present invention relates to an apparatus and to a method for heating an area of a workpiece prior to welding said area of the workpiece and/or after welding the workpiece, and to a welding system comprising such an apparatus.

### Prior art

In arc welding, an arc is ignited between an electrode of a welding torch or arc torch and a workpiece such that an area of the workpiece around a point of impact of the arc is melted by means of the arc, thus creating a welding bath of molten workpiece material. Other welding processes are known in the prior art.

Depending on the material composition and the size of the of the workpiece, it can be helpful or required to preheat the workpiece prior to the welding process in order to positively influence properties of the welding process and the produced weld joint. It is desirable to preheat workpieces prior to welding in an effective, low-emission manner.

### Disclosure of the invention

The present invention relates to an apparatus for heating an area of a workpiece prior to welding of said area of the workpiece and/or after welding the workpiece and to a method of heating an area of a workpiece prior to welding said area of the workpiece and/or after welding the workpiece using an apparatus of that kind and to a welding system comprising such an apparatus with the features of the independent claims. Advantages and embodiments of the invention will become apparent from the description and the appended figures.

The present invention provides a possibility to use welding torches or arc torches, which can usually be used for performing a welding process itself, for heating or preheating a workpiece to be welded and/or for heating the workpiece after the welding process, e.g. for post-processing, especially for performing a straightening process and/or a heat treatment process on the workpiece. The welding process itself may be an arc welding process or any other welding process.

The apparatus according to the present invention comprises a torch holder unit and a multitude of arc torches or weld torches. Each of these arc torches is configured to be arranged, held or mounted at a predetermined and individual torch position at the torch holder unit, particularly at specific predetermined positions relative to each other, and further in a predetermined and individual torch distance relative to a reference point in a longitudinal direction or axial direction of the corresponding arc torch, particularly relative to a reference point on the workpiece or on a surface of the workpiece. The reference point may also be a fixed point on the corresponding torch holder unit. The corresponding torch distance of each arc torch particularly refers to a distance between a specific point of the corresponding arc torch, especially a tip of an electrode of the corresponding arc torch, and the corresponding reference point. The corresponding reference point can be determined for each arc torch individually and can expediently refer to a point of intersection of the longitudinal axis of the corresponding torch and the surface of the workpiece.

The various arc torches can be arranged individually at the torch holder unit, particularly in a specific pattern relative to each other, thus creating a specific array of arc torches.

Each of the arc torches is configured to be controlled to ignite an arc between the corresponding arc torch, especially between an electrode of the corresponding arc torch, and the workpiece, and to heat the area of the workpiece, particularly an area around the points of impact or around the areas of impact of the arcs on a surface of the workpiece, by means of the corresponding arc to a predetermined temperature below a melting temperature of a material of the workpiece. For this purpose, the electrode of the corresponding arc torch and the workpiece are electrically connected with a corresponding power source, wherein a voltage and current and optionally an impact area are particularly controlled such that the corresponding arc introduces a specific amount of energy into the workpiece, which heats the workpiece to the predetermined temperature, but does not melt the material of the workpiece.

The invention further relates to a method of heating an area of a workpiece prior to welding said area of the workpiece and/or after welding the workpiece. Advantages and embodiments of the apparatus according to the present invention and of the method according to the present invention shall arise from the present description in an analogous manner.

According to this method, each arc torch of a predetermined number of arc torches is arranged at a predetermined, individual torch position relative to each other. The arc torches can be arranged individually, particularly in a specific pattern relative to each other, thus creating a specific array of arc torches. The number and torch positions of the arc torches are particularly predetermined such that the corresponding area of the workpiece to be welded can effectively and uniformly be heated, in particular such that an interaction of the various arcs can either be optimized or also prevented.

Further, each arc torch is arranged at a corresponding predetermined torch distance relative to the corresponding reference point in the longitudinal direction of the corresponding arc torch. Thus, each of the arc torches is individually and specifically aligned relative to the corresponding reference point. The distance to the workpiece can e.g. be measured by a sensor.

Further, each arc torch is controlled to ignite an arc between the corresponding arc torch and the workpiece and to heat the area of the workpiece by means of the corresponding arc to the predetermined temperature below the melting temperature of the workpiece material. For this purpose, each arc torch is connected with an individual power source or with a common power source, e.g. the welding power source, wherein the voltage and current for each arc torch is individually controlled, expediently in dependence of the temperature of the workpiece determined by means of the corresponding temperature sensor.

The invention provides a possibility to arrange and operate arc torches such that the corresponding workpiece is only heated to a desired temperature but not melted. Arc torches are usually provided for welding purposes to ignite an arc with high current density and high heat flux density in order to heat a material above its melting temperature. In contrast to that, the properties of the arcs in the present apparatus and method are expediently amended such that current density and heat flux density are reduced in order to prevent melting of the workpiece material. In particular, the specific number of arc torches, their individual torch positions, their individual torch distances and the specific voltage and current for each arc torch are specifically predetermined in order to ignite arcs with a low current density and a low heat flux density.

By means of the individual torch positions, the various torches can be spaced apart from each other such that an interaction of their respective arches can be reduced or prevented. Depending on the workpiece properties and the welding process to be performed, the arc torches can be arranged in a symmetrical or asymmetrical pattern. For example, the distance between different arc torches can be in the range between 100 mm and 150 mm.

By means of a relatively large torch distance, a long arc can be created such that an area of impact of the arc on the workpiece surface can be increased and such that a low energy density can be achieved. For example, the torch distance between the torch electrode tip and the workpiece surface can be in the range between 15 mm and 20 mm.

Each of the arc torches can be connected with an individual power source. However, it is also possible to provide a common power source for several or all of the arc torches, wherein the current for each arc torch can individually be controlled, e.g. by individual circuit breakers. The power sources can be arranged as an array close to the arc torches, e.g. as a common power source with individual power sections and a central control system. In this case, a common or central cooling of all arc torches can be provided. The power sources can also be arranged distanced from the arc torches, wherein the current can be transported toward the arc torches by means of e.g. copper wires with large cross-section or copper busbars. For example, water cooled power cables can be used for connecting the arc torches with the corresponding power source. For example, the arc torches can be connected to the same power source, which is also used for performing the welding process. For example, the current for each arc can be in the range between 400 A and 800 A.

The apparatus and the method according to the present invention can easily be installed, adjusted and adapted with low costs and low expenditure. Particularly, common, standardized arc torches or welding torches as well as common, standardized welding power sources can be used. Particularly, the same power supply that is used for welding can also be used for the heating process. In this case, welding and heating can be done sequentially and special high-power switches or resistors can be used for this purpose. The number, position and orientation of the arc torches can individually and flexibly be adjusted in dependence of the specific workpiece or the specific welding process to be performed. Further, the invention allows to start and/or continue the welding process while the preheating process is still in progress. The invention further allows to heat workpieces in a low emission, climate neutral manner. Regenerative energy sources can expediently be used for powering the arc torches. Gases or shielding gases produced by means of climate neutral processes can be used for the arc torches.

Common possibilities of heating workpieces are for example inductive heating processes or combustion processes. However, inductive heating processes can be very cost intensive and can require an elaborate installation. For example, cranes can be necessary in order to inductively heat tall and massive workpieces. Further, it is usually not possible to begin the welding process while an inductive heating process is still in progress. Combustion burners for heating workpieces with combustion processes might be easier to install than inductive heating processes, but typically produce high emissions, especially carbon emissions. In contrast to that, the present invention allows to heat a workpiece in an electrified and climate neutral manner with low costs, low expenditure and low emissions which is easy to install and flexible to operate.

According to an embodiment, the torch holder unit comprises a frame element and a multitude of bar elements, wherein each of these bar elements is configured to be arranged at an individual bar position relative to the frame element. Each arc torch is configured to be arranged at an individual position at any one of the bar elements. The frame element can for example be square-shaped or rectangular-shaped. The bar elements can expediently be provided as linear elements and can particularly be arranged within the frame element parallel to each other and parallel to an axis of the frame, particularly parallel to a width axis of the frame. The bar elements can flexibly be shifted within the frame element in a direction parallel to the length axis of the frame element. Arc torches can flexibly be shifted along each bar element in a direction parallel to the width axis of the frame element. Therefore, the bar elements provide the possibility to flexibly arrange the arc torches at various positons within the entire frame element. Expediently, each arc torch can be arranged at the corresponding bar element such that a main axis or longitudinal axis of the corresponding arc torch is perpendicular or at least essentially perpendicular to a main area or length axis or width axis of the frame element.

Particularly, a predetermined number of bar elements can be arranged individually relative to the frame element, relative to each other and/or relative to a welding joint to be produced. For example, the bar elements can be arranged symmetrically or asymmetrically relative to the welding joint, e.g. depending on a heat absorption or heat dissipation of the workpiece. In an embodiment, the bar elements are parallel to each other and parallel to the direction of the welding joint or welding seam, i.e. the welding direction. One or several arc torches can be fastened to each of the bar elements. In particular, by aligning a corresponding bar element at its respective bar position and by arranging a corresponding arc torch at a respective individual position at this bar element, the corresponding arc torch can be arranged at its respective torch position at the torch holder unit.

Furthermore, the torch holder unit can particularly comprise a holder element configured to arrange or align the frame element relative to the workpiece. Thus, by means of this holder element, the frame element can roughly be aligned relative to the workpiece and then each of the arc torches can individually be aligned relative to their corresponding reference points.

According to an embodiment, the apparatus further comprises a multitude of torch holding elements, particularly one torch holding element for each arc torch. Each of these torch holding elements is configured to hold one of the arc torches at the torch holder unit, particularly at one of the bar elements, at the corresponding torch position. Each torch holding element comprises a linear movement element configured to move the correspondingly held arc torch in the longitudinal direction of the corresponding arc torch towards the corresponding reference point. Therefore, these torch holding elements are expediently provided to hold or fasten the arc torches at their respective torch positions and to further align the arc torches at their corresponding torch distances and to maintain these specific torch distances especially during relative movement of the torch holder unit and/or the workpiece. For example, each linear movement element can comprise a spring and/or a linear slide and/or a linear motor. Therefore, the corresponding linear movement element can apply a force to the respective held arc torch thus moving the arc torch parallel to its longitudinal axis, particularly perpendicular or at least essentially perpendicular to the main area or length axis or width axis of the frame element.

According to an embodiment, the apparatus further comprises at least one distance element arranged at each arc torch and configured to adjust the predetermined torch distance of the corresponding arc torch. The distance elements can particularly be mechanical, rigid elements attached to the corresponding arc torches, e.g. to nozzles of the corresponding arc torches. By means of the specific mechanical properties of these distance elements, for example their lengths, the corresponding torch distances can be adjusted and predetermined. Particularly, by adjusting the position of the distance element, the arc length of the corresponding arc torch can be set or adjusted. In particular, a tip of the distance element is configured to be brought into contact with the surface of the workpiece. When the corresponding arc torch is moved towards the workpiece, particularly parallel to its longitudinal axis by means of the corresponding linear movement element, the corresponding distance elements attached to this arc torch expediently help to stop the movement when the arc torch reaches the corresponding torch distance relative to the workpiece. By further applying a linear force to the arc torch parallel to its longitudinal axis by means of the linear movement element, the arc torch can be kept in its predetermined torch distance relative to the workpiece during the heating process. Thus, the linear movement elements and the distance elements in conjunction with each other are expediently configured to maintain the corresponding predetermined torch distances between the corresponding arc torches and the corresponding reference points.

According to an embodiment, a distance or a distance portion between a tip of each distance element and a tip of the corresponding arc torch, especially a tip of the electrode of the corresponding arc torch, corresponds to the predetermined torch distance of the corresponding arc torch. It shall be understood that a straight, linear distance between the tip of the corresponding electrode and the tip of the corresponding distance element can expediently be larger than the torch distance, but a portion of that straight distance in the longitudinal direction particularly corresponds to the respective torch distance. A portion of that straight distance in a radial direction or in a direction perpendicular to the longitudinal direction can expediently be predetermined.

According to an embodiment, each distance element comprises a beam element attached to the corresponding arc torch, especially to a nozzle of the corresponding arc torch, and a contact element attached to the beam element. The beam element can be aligned at a predetermined angle relative to the longitudinal axis of the corresponding arc torch. A tip of the contact element expediently corresponds to the tip of the distance element and is particularly configured to be brought into contact with the surface of the workpiece. The beam element can be a rigid element. The contact element can be connected rigidly with the beam element or can also be movable relative to the beam element, especially rotatable relative to the beam element.

According to an embodiment, the contact element is provided as a wheel element. Thus, the various contact elements can help to move the apparatus along the surface of the workpiece in order to continuously heat consecutive areas of the workpiece while maintaining the corresponding torch distances of the various arc torches towards the workpiece surface.

According to an embodiment, at least two distance elements are arranged rotationally symmetrically around each arc torch, particularly rotationally symmetric around the electrode of the corresponding arc torch. Thus, when the contact elements of these distance elements are connected with the corresponding power source, particularly with the positive pole of the power source, an electric or magnetic blowout can expediently be prevented or reduced by means of this rotationally symmetric arrangement, which could lead to a deflection of the corresponding arc.

According to an embodiment, each arc torch of the multitude of arc torches comprises an electrode, a nozzle and a shielding gas supply configured to supply or provide a shielding gas between the nozzle and the electrode, parallel or at least essentially parallel to the longitudinal axis of the electrode. For example, argon or a mixture of argon with helium and/or hydrogen can be provided as the shielding gas. A tip of the nozzle is arranged at a predetermined nozzle distance in the longitudinal direction of the corresponding arc torch relative to a tip of the electrode. In particular, when arranging the tip of the electrode in a large torch distance from the workpiece surface in order to produce a long arc with low energy density, the nozzle tip can be arranged in a rather large nozzle distance from the electrode tip forming a long nozzle in order to provide a good coverage or shrouding of the long arc with the shielding gas. For example, with torch distances between the electrode tip and the workpiece surface between 15 mm and 20 mm, a nozzle distance between 10 mm and 15 mm can be provided. It is also possible not to provide an individual nozzle for each arc torch but to provide a common nozzle for several or for all arc torches of the multitude of arc torches. This common nozzle can then be connected with a common shielding gas supply.

According to an embodiment, the contact element of the corresponding distance element arranged at a corresponding arc torch and the electrode of the corresponding arc torch are electrically connected with an electric power source. The beam element of the corresponding distance element is expediently made of an electrically insulating material. When the contact element is brought in contact with the surface of the workpiece, the workpiece can also be electrically connected to the power source via the contact element. Therefore, an electric potential is established between the workpiece surface and the arc torch electrode in order to ignite the arc between the electrode and the workpiece. Thus, the distance elements can expediently be provided for mechanically contacting the workpiece, for maintaining the corresponding predetermined torch distances and for electrically coupling the workpiece and the arc torch electrodes. For example, the power source can be the welding power source, which is also used for performing the welding process of the workpiece.

According to an embodiment, the electrode is provided as a hollow electrode, particularly as an electrode with an internal bore around its longitudinal axis. A diameter of this bore in a direction perpendicular to the longitudinal axis can be in the range between 4 mm and 5 mm. A hollow electrode of that kind expediently yields the possibility to also provide the shielding gas through this bore.

According to an embodiment, the electrode is made of tungsten, particularly doped tungsten. The arc torch can expediently be provided as a torch for tungsten inert gas welding (TIG) or plasma welding. For example, the arc torch can be provided as a torch for non-transferred plasma arc welding. Due the high melting point of tungsten, the electrode does not melt off when the arc is ignited.

According to an embodiment, the electrode is provided with a conical tip. Expediently, the outer surface of this conical tip is inclined at a predetermined angle relative to a cross-section area of the electrode. This angle can e.g. be in the range between 50° and 70°, especially in the range between 55° and 65°, especially 60° or at least essentially 60°.

According to an embodiment the apparatus further comprises at least one temperature sensor configured to determine a temperature of the workpiece, wherein each arc torch of the multitude of arc torches is configured to be controlled in dependence of the determined temperature of the workpiece. Expediently, a number of temperature sensors can be provided such that a temperature distribution on the workpiece surface can be determined, especially a temperature distribution of the area to be welded. For example, one particularly contactless temperature sensor can be provided for each arc torch to determine the temperature of the workpiece surface at or around an area of impact of the corresponding arc.

The invention further relates to a system for welding an area of a workpiece comprising a heating apparatus for heating said area according to the above aspect of the present invention, and a welding apparatus configured to weld said area. In an embodiment, the welding apparatus and the heating apparatus are configured to be jointly moved in a welding direction, particularly in a predetermined distance to each other, further particularly the welding direction being parallel to the longitudinal directions of the bar elements of an embodiment of the heating apparatus. Advantages and embodiments of the welding system according to the present invention and of the heating apparatus according to the present invention shall arise from the present description in an analogous manner.

According to an embodiment, the method according to the present invention is performed using an embodiment of the apparatus according to the present invention. In this case, the step of arranging the predetermined number of arc torches relative to each other particularly comprises arranging the corresponding bar elements at their respective individual bar positions relative to the frame element and arranging the number of arc torches at these bar elements at their respective torch position, expediently by means of the corresponding torch holding element. Further, the torch holder unit is arranged or aligned relative to the workpiece. Expediently, the frame element of the torch holder unit is arranged or aligned by means of the holder element. For the step of arranging each arc torch at the corresponding predetermined torch distance relative to the corresponding reference point, each arc torch is expediently moved in the longitudinal direction by means of the corresponding linear movement element or by moving the torch holder unit. Thus, the torch holder unit is roughly aligned relative in a predetermined distance relative to the workpiece and then each of the arc torches is individually and specifically aligned relative to the corresponding reference point.

According to an embodiment, the step of arranging each arc torch at the predetermined torch distance relative to the reference point comprises moving each arc torch in the longitudinal direction of the corresponding arc torch towards the workpiece, e.g. by means of the corresponding linear movement element, until a tip of a distance element arranged at the corresponding arc torch is brought into contact with a surface of the workpiece. This distance element can e.g. be provided as explained above with respect to the apparatus according to the invention. Thus, after aligning the torches relative to each other, each arc torch is individually moved towards the workpiece. This movement is automatically stopped, when the corresponding distance elements come into contact with the workpiece surface. By applying further force to each arc torch, each distance element is pressed against the workpiece such that the corresponding torch distance can automatically be maintained throughout the heating process.

According to an embodiment, before the step of arranging the predetermined number of arc torches relative to teach other, the method comprises determining or predetermining the number of arc torches, the torch position of each arc torch, the torch distance of each arc torch, further especially the nozzle distance of each arc torch, further especially the voltage and/or current applied to each arc torch, in dependence of properties of the workpiece and/or in dependence of properties of the welding process to be performed and/or in dependence of a simulation of the workpiece and/or in dependence of a simulation of the welding process. Therefore, the geometric arrangement of the arc torch array as well as operating parameters for each arc torch are predetermined in dependence of the individual properties of the workpiece and the welding process, e.g. in dependence of the material composition of the workpiece, the thickness of the workpiece, the welding joint to be produced etc. Expediently, a theoretical, computer-implemented simulation of the workpiece and/or the welding process can be performed in order to determine the mechanical and electric properties for an optimum energy input into the workpiece and for effectively heating the workpiece. For example, the current can be set to a fixed value and can be changed where necessary. The voltage can then be measured and used e.g. to determine changes in the process like a change in arc length, wear of the electrode or melting of the material to be heated.

According to an embodiment, the welding process is performed in the area of the workpiece after a temperature of the area of the workpiece has reached the predetermined temperature. For this purpose, the various torches for heating the workpiece can expediently be removed from the area of the workpiece and can e.g. be moved, also continuously, to other areas of the workpiece to be preheated and to be welded next. For performing the welding process, a welding apparatus can be used comprising one or several arc torches or welding torches, which can be of the same kind or also of a different kind as the arc torches used in the heating apparatus. Particularly, the welding process can be performed while the preheating is still in progress, i.e. an area already preheated by means of the apparatus can be welded while another area to be welded next is still preheated by means of the apparatus. For this purpose, both the torches for heating and the welding apparatus for welding can expediently be moved over the workpiece surface along a welding direction in a predetermined distance to each other.

According to an embodiment, each arc torch is controlled to heat the area of the workpiece in order to perform post-processing, especially straightening or a heat treatment, of the workpiece after welding the workpiece. The welding process can leave stresses in the workpiece during the subsequent cooling of the workpiece, which can cause distortion or warping. In the course of the post-processing, distortion or warping of that kind can be corrected. For example, in the course of the straightening process, the area of the workpiece can be heated to the predetermined temperature such that upon subsequent cooling, the workpiece material contracts more than it could expand when heated, and such that any resulting distortions are therefore be straightened out. The area of the workpiece heated in the course of the straightening may also be different from the welding area that was welded in the welding process and can particularly be determined depending on distortion or warping created because of the welding process.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- Figure 1: schematically shows an embodiment of an apparatus according to the invention configured to perform an embodiment of a method according to the invention in a top view.
- Figure 2: schematically shows an embodiment of an apparatus according to the invention configured to perform an embodiment of a method according to the invention in a side view.
- Figure 3: schematically shows elements of an embodiment of an apparatus according to the invention configured to perform an embodiment of a method according to the invention in a sectional side view.
- Figure 4: schematically shows an embodiment of a method according to the invention as a block diagram.
- Figure 5: schematically shows an embodiment of a welding system according to the invention configured to perform an embodiment of a method according to the invention in a top view.

### Detailed description

Identical reference sings in the figures refer to identical or identically constructed elements.

The Figures schematically show embodiments of an apparatus 100 configured to perform embodiments of a method for heating an area of a workpiece prior to welding said area of the workpiece or after welding the workpiece according to the present invention. Apparatus 100 is not meant to limit the scope of the method according to the invention as defined in the appended claims.

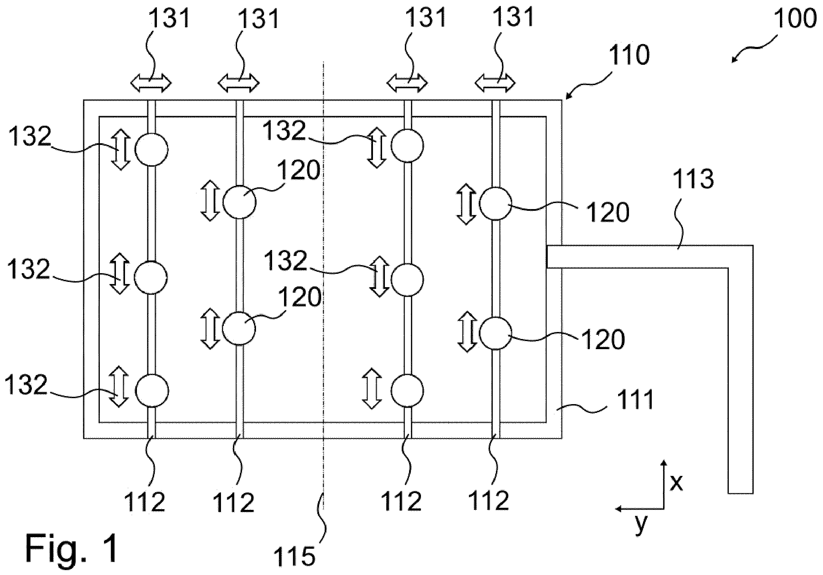

The apparatus 100 shown in Fig. 1 in a top view comprises a torch holder unit 110 and a number of arc torches 120, wherein these arc torches 120 can flexibly and individually be arranged at respective predetermined torch positions at the torch holder unit 110 and further in predetermined torch distances relative to a reference point in a longitudinal direction. Each arc torch 120 is configured to be controlled to ignite an arc between the corresponding arc torch 120 and the workpiece and to heat the area of the workpiece by means of the corresponding arc to a predetermined temperature below a melting temperature of a material of the workpiece.

The torch holder unit 110 comprises a frame element 111 and a multitude of bar elements 112. The frame element 111 in the present example is rectangular-shaped with a width axis in an x-direction and a length axis in a y-direction. However, other shapes are also possible, e.g. a square shape etc.

Each bar element 112 is configured to be arranged at an individual bar position relative to the frame element 111. For this purpose, the bar element 112 can be shifted within the frame element 111 in the y-direction parallel to the length axis of the frame element 111, as indicated by reference sign 131.

Each arc torch 120 is configured to be arranged at an individual position at any one of the bar elements 112. For this purpose, the arc torches 120 can flexibly be shifted along the bar elements 111 in x-direction parallel to the width axis of the frame element 111 as indicated by reference sign 132.

By aligning the bar elements 112 at their respective bar positions and by arranging the arc torches 120 at their respective individual positions at these bar elements 112, the arc torches 120 are arranged at their respective torch position at the torch holder unit 110. Thus, a predetermined array or pattern of arc torches 120 relative to the torch holder unit 110 and relative to each other can be created. For example, the various arc torches 120 can be arranged in a symmetrical or asymmetrical pattern relative to a symmetry axis 115 of the frame element 111. For example, the distance between the arc torches can be in the range between 100 mm and 150 mm.

The torch holder unit 110 further comprises a holder element 113 configured to arrange or align the frame element 111 relative to the workpiece to be welded. For example, the frame element 111 can be aligned such that the symmetry axis 115 of the frame element 111 is arranged parallel to a centre of a weld seam to be produced.

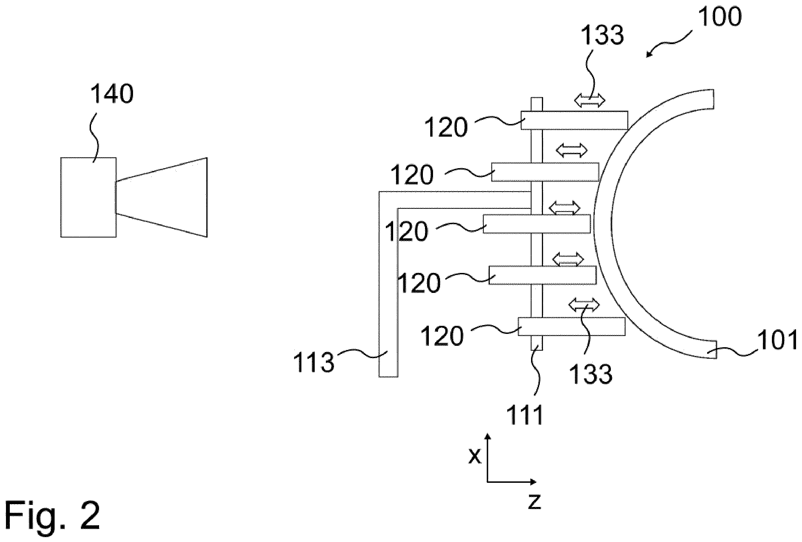

Fig. 2 schematically shows the apparatus 100 in a side view. Fig. 2 also shows the workpiece 101 to be heated by the apparatus 100. As indicated by reference sign 133, each arc torch 120 can individually be moved in a z-direction parallel to its longitudinal axis and perpendicular to the width axis and the length axis of the frame element 111. This way, each arc torch 120 can individually be arranged at its respective predetermined torch distance relative to a reference point on the workpiece 101 or on a surface of the workpiece 101. For example, the torch distances between the arc torches 120 and the workpiece 101 can be in the range between 15 mm and 20 mm.

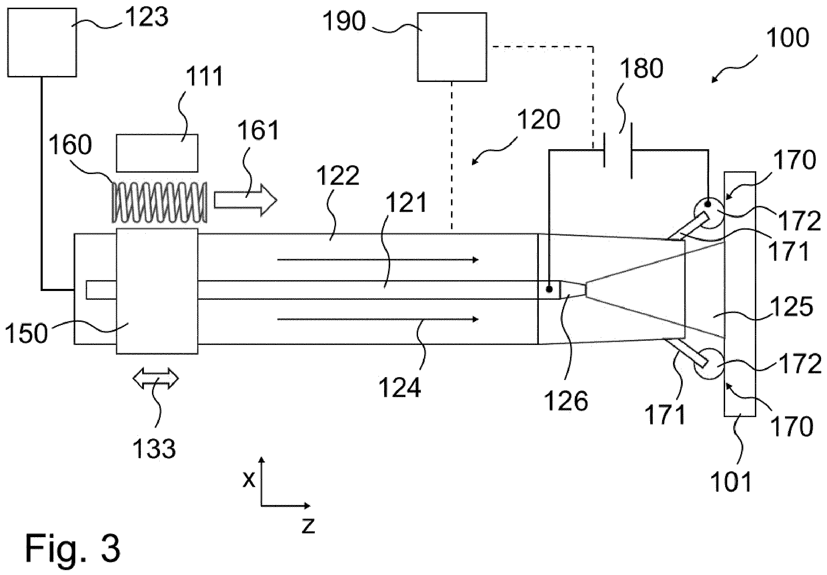

As shown in Fig. 2, the apparatus 100 further comprises a temperature sensor 140 configured to determine a temperature of the workpiece 101. The arc torches 120 are configured to be controlled in dependence of this determined temperature of the workpiece, as will hereafter be explained in reference to Fig. 3.

Fig. 3 schematically shows elements of the apparatus 100 in a sectional side view. In particular, Fig. 3 shows one of the arc torches 120 arranged at the frame element 111 at its respective torch position.

A torch holding element 150 is provided for holding the arc torch 120 at the frame element 111, particularly at the corresponding bar element 112. In particular, one torch holding element 150 can be provided for each arc torch 120.

The torch holding element 150 further comprises a linear movement element 160 configured to apply a force 161 to the arc torch 120 and to move the arc torch 120 in z-direction or longitudinal direction towards the workpiece 101. As shown in Fig. 3, the linear movement element 160 can comprise a spring. Alternatively or additionally, the linear movement element 160 can comprise a linear slide and/or a linear motor.

As shown in Fig. 3, the arc torch 120 comprises an electrode 121, a nozzle 122 and a shielding gas supply 123 configured to supply a shielding gas 124 between the nozzle 122 and the electrode 121, e.g. argon or a mixture of argon with helium and/or hydrogen. Gases or gas mixtures produced by means of climate neutral processes are used as the shielding gas 124.

Fig. 3 further shows an arc 125 ignited between the electrode 121 and the workpiece 101. The tip of the electrode 121 is arranged in a large torch distance from the workpiece 101 surface, e.g. between 15 mm and 20 mm, in order to produce a long arc 125 with low energy density. The tip of the nozzle 122 is arranged at a predetermined nozzle distance in the longitudinal z-direction relative to a tip of the electrode 121, thus forming a long nozzle in order to provide a good coverage or shrouding of the long arc 125 with the shielding gas 124.

The electrode 121 can be made of tungsten or doped tungsten and can further be provided as a hollow electrode, e.g. with an internal bore around its longitudinal axis with a diameter of the bore in x-direction between 4 mm and 5 mm. Further, the electrode 121 can be provided with a conical tip 126, e.g. wherein a radial surface of the conical tip 126 is inclined at an angle of 60° relative to the longitudinal axis of the electrode 121.

As further shown in Fig. 3, distance elements 170 are provided, wherein each distance element 170 comprises a beam element 171 attached to the arc torch 120, e.g. to the nozzle 122, and a contact element 172 attached to the beam element 171. The beam element 171 can be a rigid element. The contact element 172 can be provided as a wheel element rotatable relative to the beam element 171.

Although two distance elements 170 are shown in Fig. 3, it is to be understood that each arc torch 120 can also comprise only one distance element 170 or more than two distance elements 170. Particularly, a multitude of distance elements 170 can be arranged rotationally symmetric around the corresponding arc torch 120.

The distance elements 170 are provided to adjust and predetermine the corresponding torch distance of the arc torch 120. In particular, a distance portion in the longitudinal z-direction between a tip of each distance element 170, especially between a tip of the corresponding contact element 172, and the tip of the arc torch 120 corresponds to the predetermined torch distance. Therefore, when the arc torch 120 is moved in the longitudinal z-direction towards the workpiece 101 by means of the linear movement element 160, the distance elements 170 come in contact with the surface of the workpiece 101, such that the movement is stopped when the arc torch 120 reaches the corresponding torch distance relative to the workpiece 101. By further applying the linear force 161 to the arc torch 120 by means of the linear movement element 160, the arc torch 120 maintains its predetermined torch distance relative to the workpiece 101.

One of the contact elements 172 and the electrode 121 are electrically connected with an electric power source 180. For example, one common power source for several or all of the arc torches 120 can be provided, which can be the welding power source also used of the subsequent welding process. It is also possible to provide an individual power source for each arc torch 120. A regenerative energy source is used to provide the electrical power of the power source 180. When this contact element 172 is brought in contact with the surface of the workpiece 101, the workpiece 101 is also electrically connected to the power source 180 and the arc 125 can be ignited.

A control unit 190 is provided for controlling the voltage and current provided by means of the power source 180 such that an area of the workpiece 101, particularly an area around an area of impact of the arc 125 on the surface of the workpiece 101, is heated by means of the arc 125 to the predetermined temperature below the melting temperature of the workpiece material. Particularly, the actual temperature of the workpiece 101 as determined by means of the temperature sensor 140 can be considered for controlling the voltage and current of the power source 180. For example, the current for the arc 125 can be in the range between 400 A and 800 A.

The present invention provides a possibility to arrange and operate the arc torches 120 such that the workpiece 101 is heated to the desired temperature but not melted. By means of the specific number of arc torches 120, their individual torch positions, their individual torch distances and the specific voltage and current provided to each arc torch 120, properties of the arcs 125 ignited by the arc torches 120 are amended such that current density and heat flux density are reduced in order to prevent melting of the workpiece 101.

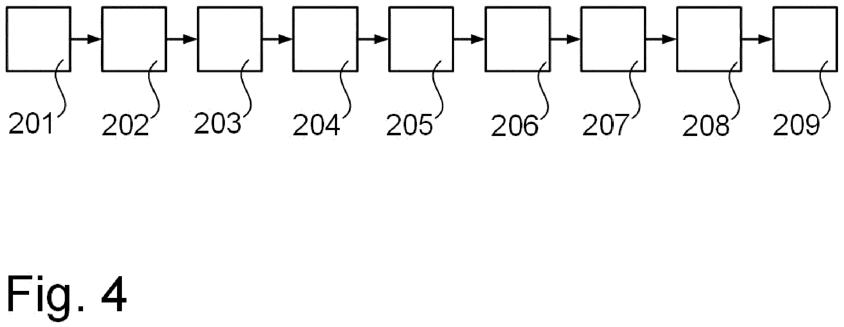

Fig. 4 shows an embodiment of a method for heating a workpiece according to the invention as a block diagram. For example, the apparatus 100 as shown in Fig. 1 to Fig. 3 can be used for performing the method. In the following, for ease of illustration, an apparatus 100 as discussed above is used for implementing the method.

In step 201 the number of arc torches 120, the individual torch position of each arc torch 120, the individual torch distance of each arc torch 120, the nozzle distance of each arc torch 120 as well as the voltage and current applied to each arc torch 120 are predetermined. Thus, a geometric arrangement of the various arc torches 120 is predetermined, particularly a pattern of the arc torches 120 arranged relative to the torch holder unit 110 and relative to the workpiece 101. Further, electrical parameters for controlling the arc 125 of each arc torch 120 are predetermined. These different values and parameters are predetermined in dependence of properties of the workpiece and in dependence of properties of the welding process. For this purpose, a theoretical, computer-implemented simulation of the workpiece and the welding process can be performed.

In step 202, the corresponding predetermined number of arc torches 120 is arranged each at a predetermined torch position relative to each other, e.g. at the torch holder unit 110 of an apparatus 100. For this purpose, a corresponding number of bar elements 112, for instance, is arranged at the frame element 111. Then, the arc torches 120 are arranged at corresponding individual positions at the bar elements 112 by means of the holding elements 150, such that the arc torches 120 are arranged at their respective predetermined torch positions.

In step 203, the electrodes 121 and one contact element 172 of each arc torch 120 are connected with the respective power source 180, e.g. with a common power source for all the arc torches 120.

In step 204, the torch holder unit 110 is aligned relative to the workpiece 101 by means of the holder element 113.

In step 205, each arc torch 120 is arranged at the corresponding predetermined torch distance relative to the corresponding reference point on the surface of the workpiece 101. For this purpose, each arc torch 120 and/or the torch holder unit 110 is moved towards the workpiece 101 in the longitudinal z-direction until the corresponding distance elements 172 of the arc torches 120 are brought into contact with the workpiece surface. The arc torches 120 are thus roughly arranged according to the geometry to be heated. Then, the torch holder unit 110 is further moved towards the workpiece 101, e.g. until half a movement distance of the springs of the linear movement elements 160 is reached. In this way, all torches 120 are prestressed and can compensate changes or inaccuracies of the workpiece 101 in both directions, i.e. in a positive and in a negative z-direction. However, it is also possible that the distance can be set and controlled by a distance sensor in combination with linear axis actuator. Further, by adjusting the position of the distance elements 170, the arc length of the corresponding arc torches 120 can be set or adjusted.

In step 206, each arc torch 120 is controlled by means of the control unit 190 to ignite the corresponding arc 125. The control unit 190 controls voltage and current for each arc torch 120 such that the area of the workpiece around the areas of impact of the corresponding arcs 125 is preheated to the predetermined temperature below the melting temperature.

In step 207, when the corresponding area of the workpiece 101 comprising the areas of impact of the various arcs is heated to the predetermined temperature, the number of arc torches 120, particularly the apparatus 100, is moved along the surface of the workpiece 101 along a welding direction in order to preheat another area of the workpiece to be welded.

In step 208, the welding process is performed in the area of the workpiece 101 preheated to the predetermined temperature in step 207. For this purpose, a welding apparatus is used comprising one or several arc torches or welding torches, which can be of the same kind or also of a different kind as the arc torches used in the preheating apparatus. The welding process can therefore be performed in the corresponding area preheated by means of the apparatus 100 while another area to be welded next is still preheated by means of the apparatus 100.

In step 209, after the welding process has been finished, the number of arc torches 120, particularly the heating apparatus 100, can be used for post-processing the workpiece 101, e.g., for correcting distortions of the workpiece 101 caused by the welding process in the course of a straightening process. For this purpose, the arc torches 120 are arranged relative to a corresponding reference point on the workpiece 101 accordingly to steps 204 and 205. The arc torches 120 are then controlled to ignite corresponding arcs such that a corresponding area to be corrected is heated to a corresponding predetermined temperature. In particular, each torch 120 is controlled to perform the straightening of the corresponding area of the workpiece 101.

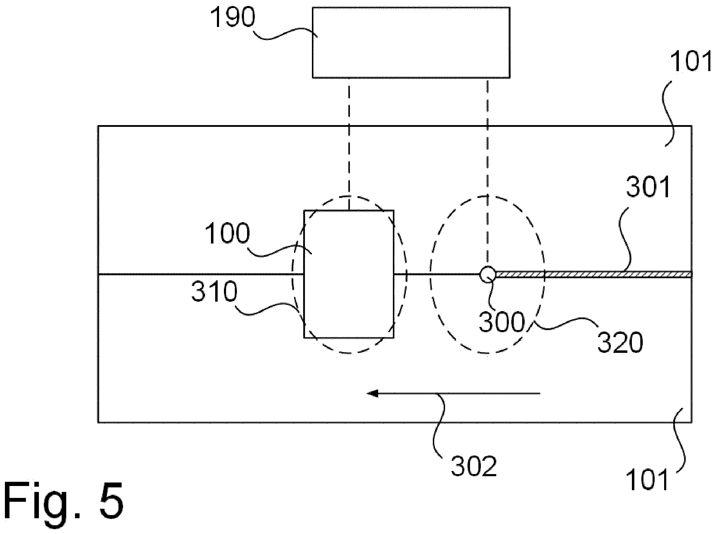

The simultaneous welding and preheating processes according to steps 206 to 208 shall be explained with reference to Fig. 5, wherein Fig. 5 schematically shows a welding system comprising the preheating apparatus 100 as shown in Fig. 1 to Fig. 3 in a top view. As shown in Fig. 5, workpieces 101 shall be welded together, e.g. two separate pipes shall be welded together to form a commotion, joint pipe. As further shown in Fig. 5, the apparatus 100 preheats an area 310 of the workpieces 101. A welding apparatus 300, e.g. comprising one arc torch, performs a welding process in an area 320 previously preheated by means of the apparatus 100. The preheating apparatus 100 and the welding apparatus 300 are moved parallel to the surface of the workpieces 101 along a welding direction 302. By moving the welding apparatus 300 along the welding direction 302, a weld joint or weld seam 301 is created. By analogously moving the apparatus 100 along the welding direction 302, e.g. in a predetermined distance to the welding apparatus 300, the apparatus 100 can preheat the area 310 which will subsequently be welded by means of the welding apparatus 300. The welding direction 302 can coincide or be parallel to the symmetry axis 115 of the frame element 111 as shown in Fig.1. For example, the preheating apparatus 100 and the welding apparatus 300 can be controlled by the same control unit 190 in order to coordinate the preheating and the welding process.

The present invention therefore allows to heat the workpiece 101 in an electrified and climate neutral manner with low costs, low expenditure and low emissions which is easy to install and flexible to operate. Further, the present invention allows to begin the welding process while the preheating process is still in progress, i.e. an area 320 already preheated by means of the invention can be welded while another area 310 to be welded next is still preheated by means of the invention.

### List of reference signs

- 100: apparatus for heating a workpiece
- 101: workpiece
- 110: torch holder unit
- 111: frame element
- 112: bar element
- 113: holder unit
- 115: symmetry axis of the frame element 111
- 120: arch torches
- 121: electrode
- 122: nozzle
- 123: shielding gas supply
- 124: shielding gas
- 125: arc
- 126: tip of the electrode 121
- 131: shifting direction of the bar elements 112 relative to the frame element 111
- 132: shifting direction of the arc torches 120 relative to the bar elements 112
- 133: moving direction of the arc torches 120 relative to the frame element 111
- 140: temperature sensor
- 150: torch holding element
- 160: linear movement element
- 161: force
- 170: distance element
- 171: beam element
- 172: contact element
- 180: electric power source
- 190: control unit
- 201 to 209: method steps
- 300: welding apparatus
- 301: weld seam
- 302: welding direction
- 310: area of the workpiece to be heated by means of the apparatus
- 320: area of the workpiece already heated by means of the apparatus

## Claims

1. An apparatus (100) for heating an area (310, 320) of a workpiece (101) prior to welding said area (310, 320) of the workpiece (101) and/or after welding the workpiece (101), comprising:
a torch holder unit (110) and
a multitude of arc torches (120),
wherein each arc torch (120) of the multitude of arc torches is configured to be arranged at a predetermined torch position at the torch holder unit (110) and in a predetermined torch distance relative to a reference point in a longitudinal direction of the corresponding arc torch (120), particularly to a reference point on the workpiece (101), and
wherein each arc torch (120) of the multitude of arc torches is configured to be controlled to ignite an arc (125) between the corresponding arc torch (120) and the workpiece (101) and to heat the area (310, 320) of the workpiece (101) by means of the corresponding arc (125) to a predetermined temperature below a melting temperature of a material of the workpiece (101).

2. The apparatus (100) according to claim 1, wherein the torch holder unit (110) comprises a frame element (111) and a multitude of bar elements (112),
wherein each bar element (112) of the multitude of bar elements is configured to be arranged at an individual bar position relative to the frame element (111) and
wherein each arc torch (120) of the multitude of arc torches is configured to be arranged at an individual position at any one of the bar elements (112).

3. The apparatus (100) according to claim 1 or 2, further comprising a multitude of torch holding elements (150),
wherein each torch holding element (150) of the multitude of torch holding elements is configured to hold one arc torch (120) of the multitude of arc torches at the torch holder unit (110) at the corresponding torch position and
wherein each torch holding element (150) of the multitude of torch holding elements comprises a linear movement element (160) configured to move the correspondingly held arc torch (120) in the longitudinal direction of the corresponding arc torch (120) towards the corresponding reference point.

4. The apparatus (100) according to any one of the preceding claims, further comprising at least one distance element (170) arranged at each arc torch (120) of the multitude of arc torches and configured to adjust the predetermined torch distance of the corresponding arc torch,
particularly wherein a distance or a distance portion between a tip of each distance element (170) and a tip of the corresponding arc torch (120) corresponds to the predetermined torch distance of the corresponding arc torch, and/or
particularly wherein each distance element (170) of the at least one distance element comprises a beam element (171) attached to the corresponding arc torch (120) and a contact element (172) attached to the corresponding beam element (171),
the contact element (172) particularly being provided as a wheel element, and/or
particularly wherein at least two distance elements (170) are arranged rotationally symmetric around each arc torch (120) of the multitude of arc torches.

5. The apparatus (100) according to any one of the preceding claims, wherein each arc torch (120) of the multitude of arc torches comprises:
an electrode (121),
a nozzle (122) at least partly surrounding the electrode (121), and
a shielding gas supply (123) configured to supply a shielding gas (124) between the nozzle (122) and the electrode (121),
wherein a tip of the nozzle (122) is arranged at a predetermined nozzle distance in the longitudinal direction of the corresponding arc torch (120) relative to a tip of the electrode (121),
particularly wherein one electrode or several electrodes (121) of the multitude of arc torches (120) are each provided as a hollow electrode and/or made of tungsten or doped tungsten and/or provided with a conical tip (126).

6. The apparatus (100) according to claim 4 and 5, when comprising a contact element (172), wherein the contact element (172) of the corresponding distance element (170) is arranged at a corresponding arc torch (120) and the electrode (121) of the corresponding arc torch (120) are connected with an electric power source (180).

7. The apparatus (100) according to any one of the preceding claims, further comprising at least one temperature sensor (140) configured to determine a temperature of the workpiece (101), wherein each arc torch (120) of the multitude of arc torches is configured to be controlled in dependence of the determined temperature of the workpiece (101).

8. A system for welding an area (310, 320) of a workpiece (101) comprising a heating apparatus (100) for heating said area (310, 320) according to any one of the preceding claims and a welding apparatus (300) configured to weld said area (310, 320).

9. The system of claim 8, wherein the welding apparatus (300) and the heating apparatus (100) are configured to be jointly moved in a welding direction (302), particularly in a predetermined distance to each other, further particularly the welding direction (302) being parallel to the longitudinal directions of the bar elements (112) of the heating apparatus (100) according to claim 2.

10. A method of heating an area (310, 320) of a workpiece (101) prior to welding said area (310, 320) of the workpiece (101) and/or after welding the workpiece (101), comprising the steps of:
arranging (202) a predetermined number of arc torches (120) each at a predetermined torch position relative to each other;
arranging (205) each arc torch (120) at a predetermined torch distance relative to a reference point in a longitudinal direction of the corresponding arc torch (120), particularly to a reference point on the workpiece (101),
controlling (206) each arc torch (120) to ignite an arc (125) between the corresponding arc torch (120) and the workpiece (101) and to heat the area (310, 320) of the workpiece (101) by means of the corresponding arc (125) to a predetermined temperature below a melting temperature of a material of the workpiece (101).

11. The method according to claim 10, wherein the step of arranging each arc torch (120) at the predetermined torch distance relative to the reference point comprises: moving (205) each arc torch (120) in the longitudinal direction of the corresponding arc torch (120) towards the workpiece (101) until a tip of a distance element (172) arranged at the corresponding arc torch (120) is brought into contact with a surface of the workpiece (101).

12. The method according to claim 10 or 11, further comprising before the step of arranging the predetermined number of arc torches (120) each at the predetermined torch position relative to each other:
predetermining (201) the number of arc torches (120), the torch position of each arc torch (120), the torch distance of each arc torch (120) in dependence of properties of the workpiece (101) and/or in dependence of properties of the welding process to be performed and/or in dependence of a simulation of the workpiece (101) and/or in dependence of a simulation of the welding process.

13. The method according to any one of the claims 10 to 12, further comprising: performing (208) a welding process in the area (310, 320) of the workpiece (101) after a temperature of the area (310, 320) of the workpiece (101) has reached the predetermined temperature.

14. The method according to any one of the claims 10 to 13, further comprising: controlling (209) each arc torch (120) to heat the area (310, 320) of the workpiece (101) in order to perform post-processing, especially straightening, of the workpiece (101) after welding the workpiece (101).

15. The method according to any one of the claims 10 to 14, using an apparatus (100) according to any one of the claims 1 to 9.
